Europäisches Patentamt

European Patent Office

Office européen des brevets

(19)

(11) Veröffentlichungsnummer: **0 109 497**
**B1**

(12)  # EUROPÄISCHE PATENTSCHRIFT

(45) Veröffentlichungstag der Patentschrift:
09.04.86

(21) Anmeldenummer: 83108955.2

(22) Anmeldetag: 10.09.83

(51) Int. Cl.⁴: **C 02 F 9/00**, **C 09 C 1/48**,
**C 01 B 3/34**

(54)  **Verfahren zur Ausschleusung von Schwermetallasche aus einer wässrigen Russsuspension.**

(30) Priorität: 10.11.82 DE 3241538

(43) Veröffentlichungstag der Anmeldung:
30.05.84 Patentblatt 84/22

(45) Bekanntmachung des Hinweises auf die Patenterteilung:
09.04.86 Patentblatt 86/15

(84) Benannte Vertragsstaaten:
AT BE CH DE FR GB IT LI LU NL SE

(56) Entgegenhaltungen:
EP - A - 0 005 138
DE - B - 1 208 842
FR - A - 2 505 808
GB - A - 741 135
US - A - 3 929 429

(73) Patentinhaber: AMH-Chemie GmbH, Postfach,
D-2211 Büttel (DE)

(72) Erfinder: Soyez, Werner, Dr., Amselweg 5,
D-2210 Itzehoe (DE)

(74) Vertreter: Glawe, Delfs, Moll & Partner Patentanwälte,
Postfach 26 01 62 Liebherrstrasse 20,
D-8000 München 26 (DE)

## Beschreibung

Wie bekannt, läßt sich Synthesegas durch partielle Oxidation von Ölen unterschiedlicher Konsistenz und Beschaffenheit mittels Sauerstoff oder Luft und Wasserdampf herstellen. Eines der seit ca. 25 Jahren praktizierten Verfahren ist der Shell-Schwerölvergasungs-prozeß, siehe "Gas- und Wasserfach" 19 (1964), 512 ff.

Für diesen nicht katalytischen Partialverbrennungsprozeß liegen die Reaktortemperaturen bei ca. 1 200 bis 1 600 °C, die Drücke vorzugsweise bei ca. 40 bis 60 bar. Die Rückgewinnung der Wärme des rußhaltigen Synthesegases erfolgt im Abhitzekessel, daran schließen sich die Wascheinrichtung zur Entfernung des Rußes sowie die Rußscheideanlage an.

Der bei der Vergasung anfallende Rußanteil - ca. 1 bis 2 % vom Einsatzöl -, wird mit Kreislaufwasser niedergeschlagen und als Ruß-Slurry ausgetragen, z. B. gemäß DE-C 1 076 092. In bevorzugter Ausführungsform wird der wäßrigen Rußsuspension ein mit Wasser nicht mischbares organisches Hilfsmittel, z. B. Mineralöl, zugesetzt, das zur Aufnahme des Rußes befähigt ist, siehe z. B. DE-C 1 042 793. Durch Mischen mit Kohlenwasserstoffen wird das Rußwasser gereinigt, wobei leichtere Kohlenwasserstoffe ein aufschwimmendes Ruß-Kohlenwasserstoffgemisch, auch Rußbenzin bezeichnet, bilden, während schwerere Kohlenwasserstoffe zu Ruß-Kohlenwasserstoff-Agglomeraten, auch als Pellets bezeichnet, führen. Die bei der Mischung unter Rühren entstehenden Ruß-Öl-Pellets werden über Rüttelsiebe abgeschöpft, das gereinigte Wasser geht als Scrubberspeisewasser in den Wasserkreislauf der Schwerölvergasung zurück. Früher wurden die Pellets hauptsächlich zur Unterfeuerung eingesetzt. Heute werden die Rußpellets nach Möglichkeit mit weiterem Öl vermischt, homogenisiert und wieder dem Einsatzöl zugesetzt. Unter der Voraussetzung, daß der Ruß aus reinem Kohlenstoff bestünde, müßte ein 100 %iges Recycling des Rußes prinzipiell möglich sein.

Ungünstigerweise beinhaltet der Ruß jedoch einen wesentlichen Anteil der im Einsatzöl vorhandenen Schwermetallverbindungen, insbesondere Sulfide und Oxide hauptsächlich von Vanadin, Nickel und Eisen. Mit der Rückführung des Rußes zum Einsatzöl konzentrieren sich diese Ascheanteile im Einsatzöl, im Rußwasser, Kreislaufwasser, Abwasser und den Rußpellets auf. Höhere Aschekonzentrationen führen in der Schwerölvergasung zur Schädigung der Reaktorausmauerung und zu Verlegungen in den Abhitzekesseln. Mit dem Aschepegel in den Kreisläufen der Shellanlage steigt auch der Metall-Carbonylübertrag in die nachgeschalteten Gaswäschen an und führt dort durch Sulfid-Ausscheidung zu Betriebsstörungen. Anlagenstillstände und aufwendige Reinigungsarbeiten sind die Folge. Damit verbietet sich eine höhere Ruß-Recycling-Rate. Ein Teil des anfallenden Vergasungsrußes bzw. der Pellets muß aus der Anlage ausgeschleust, extern unterfeuert oder verkauft werden. Auch vergleichsweise niedrige Recycle-Raten ( < 50 %) führen bereits zu einem. Anwachsen des Metallpegels in allen Kreislaufströmen und belasten dadurch die Vergasungsreaktoren sowie die nachgeschalteten Anlagenteile und die Abwasseranlage.

Mit dem Übergang zu immer schwereren Einsatzölen stieg auch der Eintrag an schwermetallreichen Aschebildnern in den Vergasungsreaktoren an. Da die Schwermetallverbindungen nach der Ruß-Wasser-Trennung nahezu quantitativ in der Ruß-Kohlenwasserstoffphase nachgewiesen werden konnten, wurde angenommen, daß die Ascheteile im Ruß inkrustiert vorliegen, zumal es nicht möglich war, mittels zur Ruß-Wasser-Abtrennung erarbeiteter Praktiken, wie der Anwendung von Filtern, z. B. Tuch-, Kerzenund Grobsandfilter oder von Zentrifugen eine Abtrennung des im Ruß vorliegenden Ascheanteils durchzuführen.

Generell ist das Problem der Ascheaufkonzentrierung in den Ruß- und Wasserkreisläufen seit Einführung der Shell-Verfahrensweise vor ca. 25 Jahren bekannt. Trotz weltweiter Anstrengungen ist es bisher nicht gelungen, das Problem zu lösen; hohe Recycle-Raten ( > 80 %) konnten bislang nur über kurze Zeit gefahren werden.

Dies gilt auch für das in EP-A-5138 beschriebene Verfahren. Dieses sieht bei einer Synthesegasanlage im Sumpf einer Flash-Kolonne ein vertikales Wehr vor, das eine Rückhaltekammer abtrennt. Aus diesem werden ca. 11 % des Kreislaufwassers abgezogen mit maximal nur 0,2 Gew.-% Feststoff. Das Kreislaufwasser enthält danach noch bis zu 0,05 Gew.-% Feststoff.

Es ist bereits bekannt daß durch Behandeln der Rußsus-pension mit Luft oder Sauerstoff oder durch mechanische Einwirkung Pellets mit einem reduzierten Gehalt an Schwermetallverbindungen entstehen. Nach Entfernen des Rußes aus dem Ruß-Wasser sollen die Ascheteile verstärkt im ablaufenden Wasser zurückbleiben. Die vorgeschlagenen Methoden enthalten jedoch bezüglich der problematischen Abtrennung der feinstverteilten Aschepartikel nur vage Angaben oder allgemeine Hinweise auf bekannte Filtrationstechniken. Eine Abtrennung der Ascheanteile aus dem ablaufenden Wasser ist jedoch zwingend geboten, da dieses Wasser sonst mit sich aufkonzentrierenden Metallgehalten in den Kreislauf zurückgegeben und dies letztlich wieder zu einer Inkorporierung von Asche in Pellets führen würde. Auch für die auszuschleusende Wassermenge ist die Abtrennung des Ascheanteils aus Umweltgründen oder zum Schutze nachgeschalteter Anlagenteile erforderlich. Konventionelle Filter sind wegen der geringen Konzentration der Ascheanteile bei großer Filtratmenge ebenso wie Zentrifugalabscheider unwirtschaftlich. Grobsandfilter stellen nur eine Teillösung des Problems dar, da die abgefilterte Masse durch Rückspülen aus dem Filter ausgetrieben werden muß und danach wieder feinstverteilt mit geringer Konzentration in einer großen Wassermenge vorliegt.

Auf der Suche nach einer Verfahrensmöglichkeit, die ein wirtschaftliches Abtrennen der Aschebestandteile aus dem von Ruß befreiten Rußwasser und das Austragen dieser abgetrennten Ascheanteile aus dem Wasser-/ Abwassersystem einer Schwerölvergasung ermöglicht, wurde - gegensätzlich zu früherer Auffassung - festgestellt, daß sowohl bei der herkömmlichen Ruß-Benzin-Dekantierung wie auch der Rußpelletisierung wohl aufgrund unterschiedlicher Affinität zu den angebotenen Kohlenwasserstoffen wesentliche Ascheanteile nicht an Ruß gebunden werden, sondern im ablaufenden Wasser verbleiben. Unerwarteterweise zeigte sich hierbei, daß - nach Abtrennen des Rußanteils - die im Wasser verbliebenen Ascheanteile eine starke Sedimentationsneigung aufweisen. Damit ist über einfachste technische Ausrüstungen eine wirksame und wirtschaftliche Aufkonzentrierung und Ausbringung der Ascheanteile aus dem von Ruß befreiten Kreislaufwasser bzw. Ausschleusewasser möglich.

Gegenstand der Erfindung ist daher ein Verfahren zur Ausschleusung von Schwermetallasche aus einer wäßrigen unter Verwendung von Kreislaufwasser hergestellten Rußsuspension wie sie bei der Synthtesegaserzeugung durch Partialvergasung von Schwerölen anfällt, wobei diese Rußsuspension in üblicher Weise mit zur Abtrennung von Ruß geeigneten, mit Wasser nicht mischbaren, organischen Hilfsmitteln ggf. unter anschließender Pelletisierung behandelt und die wäßrige vom Ruß befreie Phase abgetrennt wird, dadurch gekennzeichnet, daß die in dieser wäßrigen Phase befindlichen Ascheteilchen, ggf. nach einer Vorkonzentrierung über Filter gezielt einer Schwerkraftstufe mit einer stündlichen Durchsatzleistung von 0,2 bis 2 m³ pro m² Klärfläche zur Sedimentierung zugeführt und anschließend aus dem Wasserkreislauf ausgeschleust werden.

Mit der vorgeschlagenen Verfahrensänderung läßt sich der Aschepegel in den Ruß- und Wasserkreisläufen deutlich absenken. Damit sind höhere Recycle-Raten bis praktisch 100 % möglich, d. h. mit nur geringem technischen Aufwand wird eine sehr wirtschaftliche Abtrennung erreicht.

**Vergleichsbeispiel A; übliche Verfahrensweise**

Im stationären Betrieb der Anlage wird das Kreislaufwasser (80 bis 100 m³/h) über die Stationen
1. Wasservorlage,
2. Scrubber,
3. Quenchrohr,
4. Rußslurryzwischenbehälter,
5. Pelletmaschine
und zurück in 1. umgepumpt. Aus diesem nahezu geschlossenen Kreislauf wird - neben einem Teil der Pellets - lediglich die Wassermenge, die durch Kondensieren des Gases anfällt kontinuierlich ausgeschleust. Das Ausschleuswasser (ca. 20 m³/h) wird aus der Wasservorlage abgezogen, in einem Kiesfilter vorgereinigt und zum HCN-Stripper gepumpt.

Nach einer Standzeit von 24 bis 48 Stunden - Normalbetrieb der Anlage vorausgesetzt - hat der Differenzdruck über das Kiesfilter den Grenzwert von 5 bis 6 m WS erreicht. Das Kiesfilter muß durch Rückspülen gereinigt werden.

Das Rückspülwasser (~ 20 m³) läuft in die Rückspülgrube und wird von dort aus direkt oder nach Zwischenaufheizung im Rußwassertank dem Kreislaufwasser im Rußslurryzwischenbehälter zugefürt.

Diese Verfahrensweise hat sich bisher - bei mehr oder weniger aschearmen Ölen - bewährt und ist unter dieser Voraussetzung nach wie vor geeignet.

Schwierig wird es beim Einsatz von Ölen mit höheren Schwermetallgehalten; hier kommt es mit üblicher Verfahrensweise zu sehr unerwünschten Ausfällen.

**Beispiel 1**

Eine Probe des Kreislaufwassers wurde zur Bestimmung der Absetzzeiten in ein 1 l-Meßgefäß gegeben. Zu Versuchsbeginn war die Probe gleichmäßig trübe. 30 Minuten nach Einfüllen hatten sich 1,5 cm³ Bodensatz gebildet. Nach weiteren 30 Minuten konnten insgesamt 2,4 cm³ Sediment nachgewiesen werden. Eine weitere Zunahme des Bodensatzes konnte in der Folgezeit nicht festgestellt werden. Die oberhalb des Bodensatzes befindliche Flüssigkeit war frei von Schwebstoffen.

**Beispiel 2**

In einem 14tägigem Betriebsversuch wurden 15 % des Kreislaufwassers einer Schwerölvergasung gezielt einer Sedimentationsstufe zugefürt. Der Durchsatz betrug 0,2 m³/m² Sedimentstionsfläche und Stunde. Der Schwermetalleintrag in die Sedimentationsstufe betrug über den genannten Zeitraum insgesamt 0,95 t Vanadium, Nickel und Eisen. Die Ausgebrachten Mengen wurden gesammelt und zurückgewogen. Eine Bilanzierung ergab einen Austrag von insgesamt 0,730 t Schwermetall (V, Ni u. Fe), was einem mittleren Wirkungsgrad von 77 % entspricht.

**Beispiel 3**

In einem weiteren 14tägigen Versuch wurden Rückspülwässer mehrerer Kiesfilter einer Sedimentationsstufe zugeführt. Der Schwermetalleintrag betrug 1,27 t V, Ni und Fe. Nach einer Sedimentationszeit von 4 Stunden wurde das überstehende geklärte Wasser abgezogen. Die hierbei im genannten Zeitraum angesammelten Sedimente wurden in Form eines dickflüssigen Schlamms abgezogen und bilanziert. Der Wasseranteil des Schlamms betrug 51 Gewichtsprozent. Es wurden insgesamt 0,91 t Metalle (V, Ni und Fe)zurückgewonnen, was einem mittleren Wirkungsgrad von ca. 72 % entspricht.

**Patentanspruch**

1. Verfahren zur Ausschleusung von Schwermetallasche aus einer wäßrigen unter Verwendung von Kreislaufwasser hergestellten Rußsuspension, wie sie bei der Synthesegaserzeugung durch Partialvergasung von Schwerölen anfällt und wobei diese Rußsuspension in üblicher Weise mit zur Abtrennung von Ruß geeigneten, mit Wasser nicht mischbaren, organischen Hilfsmitteln, ggf. unter anschließender Pelletisierung behandelt und die wäßrige vom Ruß befreite Phase abgetrennt wird, dadurch gekennzeichnet, daß in dieser wäßrigen Phase befindliche Ascheteilchen, ggf. nach einer Vorkonzentrierung über Filter, gezielt einer Schwerkraftstufe mit einer stündlichen Durchsatzleistung von 0,2 bis 2 m³ Pro m² Klärfläche zur Sedimentierung zugeführt und anschließend aus dem Wasserkreislauf ausgeschleust werden.

**Claim**

Process for removing heavy metal ash from an aqueous soot suspension such as results from the production of synthetic gas through partial gasification of heavy oils, wherein said soot suspension made by using circulating water is treated in standard manner with organic adjuvants non miscible with water and suitable for the separation of soot, optionally followed by pelletizing, and the aqueous soot-free phase is separated,
characterised in that,

the metal ash particles being in said aqueous phase, optionally after preliminary concentration by filter, are directed to a sedimentation stage having a throughput capacity of 0.2 to 2 m³ per hour and m² clarification area for sedimentation and are subsequent removed from water circulation.

**Revendications**

Procédé d'elimination des cendtes de métaux lourds d' une suspension aqueuse de suie, obtenue par l'utilisation d'eau circulant en circuit fermé lors de la production de gaz de synthèse par gazéification partielle d'huiles lourdes, suivie d'un traitement usuel de la dite suspension de suie par des additifs organiques non miscibles à l'eau, capables de séparer la suie, et éventuellement d'une transformation en pastilles, la phase aqueuse, dont la suie a été extraite, étant ensuite separée, caractérisé en ce que l'on provoque une sédimentation par gravité des particules de cendres subsistant dans la phase aqueuse, eventuellement concentrées au préalable par passage sur des filtres, sous un débit horaire réglé de 0,2 à 2 m³ par m² de surface de clarification, ces particules sédimentées étant ensuite soutirées du circuit de l'eau.